# EUROPEAN PATENT APPLICATION

(11) **EP 3 133 822 A1**
(43) Date of publication of application: **22.02.2017**
(21) Application number: 15181192.4
(22) Date of filing: 17.08.2015
(51) Int. Cl.: H04N 21/432, H04N 21/433, H04N 21/482, H04N 21/426

(54) **VIDEO PROGRAM SELECTION ARRANGEMENT**

(71) Applicant: TP Vision Holding B.V., 1097 JB Amsterdam (NL)
(72) Inventor: Maes, Jurgen Pieter, B-9052 Ghent (BE)
(74) Representative: DREISS Patentanwälte PartG mbB

(57) **Abstract**

The invention relates to a video program selection arrangement (15; 40) for use in video program receiver, such as for example a TV apparatus or set top box.

The arrangement comprises a user interface subsystem (11; 47) which displays on a screen (6; 51) distribution schedule information of at least one video program that is currently distributed. In case the user selects by entering a watch command a video program that he wants to watch, the arrangement checks whether for the selected program a recorded time shifted version is available and if so renders the time shifted version. If no time shifted version is available, the live rendering of the selected video program is rendered.

## Description

### FIELD OF THE INVENTION

The invention relates to an arrangement and method for selecting a video program to be rendered using displayed schedule information. The invention further relates to a video program receiver, in particular a TV apparatus and a set top box, comprising the arrangement and a computer program product comprising instructions which cause, when executed by a programmable processor, the method be performed.

### BACKGROUND OF THE INVENTION

US20080086746 discloses a dual tuner set top box for receiving a video distribution signal distributed over a cable network. The video distribution signal represents broadcasted video programs of a plurality of channels. By means of a tuner the video program actually broadcasted by a selected channel is extracted and rendered on a screen of a TV apparatus connected to the video output of the set top box. By means of a video recorder extracted video programs can by recorded and played back later in time (time shifted).The set top box has a user interface subsystem which can display a video program guide on the TV apparatus. The video program guide presents a list of video programs and the times that the video programs are broadcasted. The user interface subsystem enables a user to enter control commands for the selection of the video program to be rendered and to initiate recordings of broadcasted video programs and playback of the recorded video programs.

### SUMMARY OF INVENTION

It is an object of the invention to provide an arrangement and method for selecting a video program to be rendered on a video rendering device in a more user friendly manner.

According to a first aspect of the invention this object is achieved by a video program selection arrangement for selecting a video program to be rendered on a video rendering device, which arrangement comprises a user interface subsystem for causing a display of distribution schedule information of at least one video program which is currently distributed and for enabling the entry of control commands by a user, which control commands comprise a record programming command to program a recording of a video program and a program watch command for selecting the at least one video program to be rendered on the video rendering device, and a control subsystem cooperating with the user interface subsystem for controlling the programmed recording and the rendering in accordance with the entered control commands, whereby the arrangement is arranged to detect in response to the program watch command whether a time shifted version of the selected video program is available, the time shifted version of the selected program being a programmed ongoing recording of the selected video program to be rendered, to render the time shifted version of the video program without requiring further user interaction in case the availability of the time shifted version is detected, and to render the live rendering of the selected video program without requiring further user interaction in case the unavailability of the time shifted version is detected.

According to a second aspect of the invention the object is achieved by a method for selecting a video program to be rendered in which method distribution schedule information is displayed for at least one video program that is currently distributed, the entering of control commands by a user is enabled, which control commands comprise a record programming command to program a recording of a video program and a program watch command for selecting the at least one video program to be rendered on the video rendering device, in response to the program watch command it is detected whether a time shifted version of the selected video program is available, the time shifted version of the selected program being a programmed ongoing recording of the selected video program to be rendered, in case the availability of the time shifted video program is detected, the time shifted video program is rendered without requiring further user interaction, and in case the unavailability of the time shifted video program is detected, the live rendering of the selected video program is rendered without requiring further user interaction.

The invention has the advantage that in case a time shifted version of the selected video program is available, the rendering of this time shifted version is directly and automatically initiated. This in contrary to prior art systems where the user has first to select a separate menu, e.g. the recording management menu, and then select the time shifted version by means of the usual selection procedure. The invention provides a substantially faster and more user friendly selection of the rendering of video program for which a time shifted version is available. User testing has shown that when a user selects a program from an electronic program guide and a time shifted version is available, he prefers rendering of the time shifted version over the live rendering.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows an embodiment of a video program selection arrangement according to the invention,
Fig. 2 shows an embodiment of a video program receiver in the form of a TV apparatus which is provided with the arrangement according to the invention,
Fig. 3 shows an example of a video program guide, and
Fig. 4 shows a flow diagram of a program subroutine for use in the arrangement according to the invention.

### DETAILED DESCRIPTION OF EMBODIMENTS

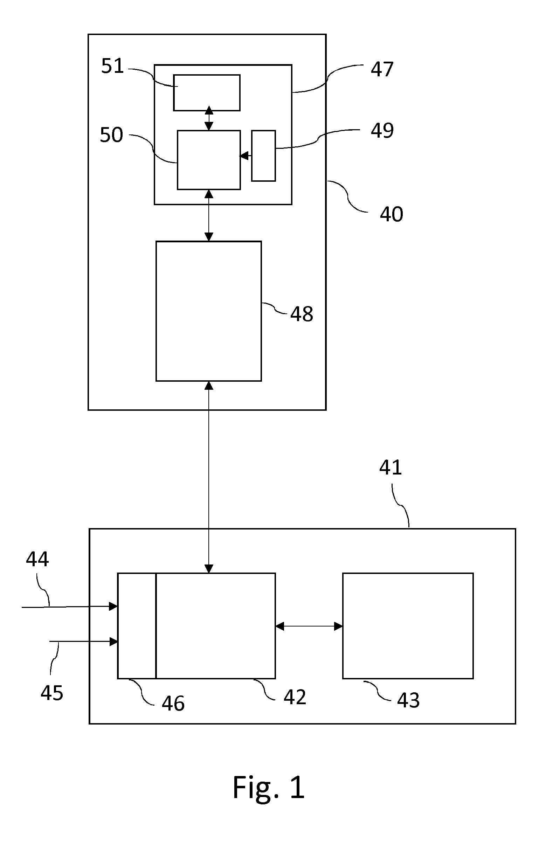

Fig. 1 shows an embodiment of a video program selection arrangement 40 according to the invention. The arrangement 40 is coupled to a video rendering system 41 for rendering video programs.

The video rendering system 41 comprises a receiver part 42 and a display part 43. A front end module 46 of the receiver part 42 is coupled to a video distribution channel 44 for receiving at the same time a plurality of video distribution signals representing video programs. Via a channel 45 for a number of video programs a time shifted video signal representing a time shifted version of the program is available. The video content of the time shifted version is the same as the content of the corresponding video program received via the video distribution channel, but there exist a time shift between the video programs so that the time shifted video program is received at a later moment in time.

The time shifted version is supplied by a video recorder playing back a distributed video program which has been recorded earlier.

The receiver part 42 selects under control of the video program selection arrangement 40 which one of the received video distribution signals and available time shifted video signals is transferred to the display part 43 so as to cause a rendering the video program corresponding with the selected signal.

The video program selection arrangement 40 comprises a user interface subsystem 47 and a control subsystem 48. The user interface subsystem 47 comprises a user input part 49 enabling the entry of control commands by a user, a display part 51 for displaying information supporting the control of the video rendering system 41, and a processor 50 for deriving control signal for the video rendering system 41 on the basis of control commands entered by the user. The processor 50 is provided with software for causing a displaying on the display part 51 distribution schedule information of at least one video program currently distributed via the video distribution channel 44. This distribution channel information can be in the form of a so called video program guide, which shows an overview of the video programs together with the time windows in which the distribution takes place. Alternatively this video program schedule information can comprise schedule information of video programs which match with a user defined selection criterion, for example generated in response to an user initiated search command or automatically generated by a so-called recommender which automatically selects scheduled video programs which match a user defined criterion on the basis of meta data assigned to the video programs.

The user interface subsystem is arranged such that the user can select a video program from the distribution schedule information displayed on the display part 51.

By entering a so-called program watch command, the user can initiate a rendering of the selected video program. However before the actual rendering is initiated it is checked whether there is also a time shifted version of the selected video program available. This is done by checking the program recording instruction of a video recorder whether for the selected program a recording is already going on.

In case a time shifted version of the selected program is available the user interface subsystem starts the control of the video rendering system 41 without requiring further user interaction so that the time shifted version of the selected program is rendered. The user may be able to use input part 49 to select the live rendering of the selected program in a different way. For example, an "OK" button of a remote control may be used to enter the watch command and a color button of a remote control may be used to invoke other options related to the selected program including an option to watch the live rendering of the selected program. Alternatively, the user may be able to fast forward the time shifted version to catch up to the live rendering.

In case a time shifted version of the selected program is unavailable, the user interface subsystem starts the control of the video rendering system 41 without requiring further user interaction so that the live rendering of the selected program is rendered.

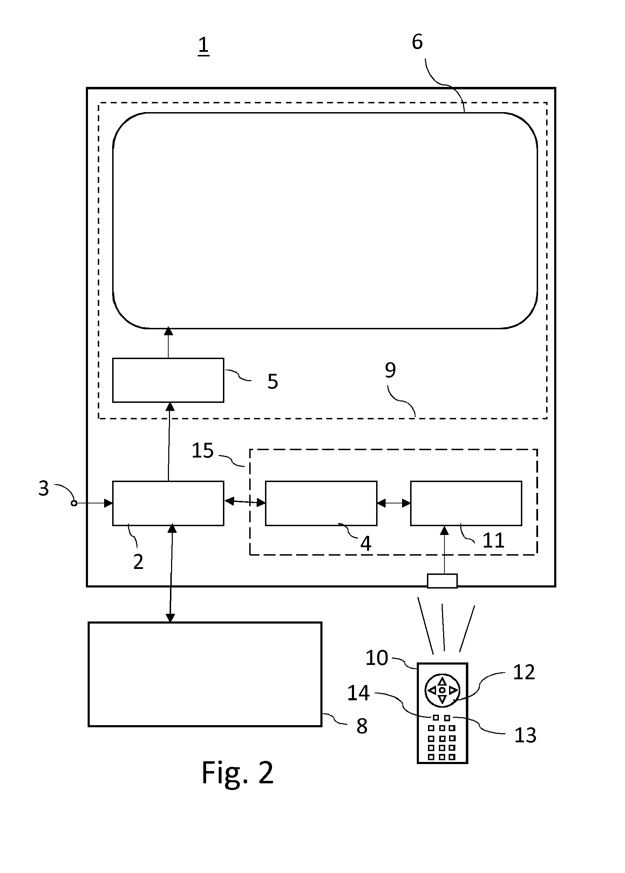

Fig 2 shows an embodiment of a video program receiver in the form of a TV apparatus 1 in which another embodiment of a video program selection arrangement is used, which is indicated by reference number 15. TV apparatus 1 comprises a front end module 2 of a usual type with an input 3 for receiving a video distribution signal Sd that is distributed, for example by broadcasting or streaming, via a cable network, a satellite antenna, the air, internet or other video distribution means to the TV apparatus 1. The distribution signal Sd comprises a plurality of video channel signals Sc in encoded and modulated form, each video channel signal Sc representing a video channel CH with a sequence of video programs Vp, in particular TV programs. The front end module 2 is arranged to extract from the distribution signal Sd, for example by means of tuners, a desired video channel signal Sc representing the video programs to be rendered live and one or more video channel signals Sc to be recorded. To this end the front end module 2 is coupled to a video rendering subsystem 9 and a video recorder 8. The video recorder 8 is arranged to record parts of the video channel signal corresponding to individual video programs Vp. The video recorder 8 can be integrated in the TV apparatus 1 or can be a separate device. The video rendering subsystem 9 comprises a video display screen 6 and driver circuitry 5 for deriving driving signals for the video display screen 6 from the video channel signal so as to cause a rendering of the video programs Vp represented by the video channel signal Sc.

The video program selection arrangement 15 comprises a control subsystem 4, which is coupled to the front end module 2, video rendering subsystem 9 and video recorder 8 for controlling the extraction, the rendering, the recording, and play-back. The control subsystem 4 is of a usual type that controls in response to a channel selection instruction CSI the front end module 2 such that the selected video channel signal Sc is extracted from the distribution signal Sd and forwarded to the video rendering subsystem 9. The channel selection instruction CSI indicates the video channel signal Sc to be extracted from the distribution signal Sd and to be transferred to the video rendering subsystem 9. The control subsystem 4 is further arranged to cause the recording of parts of the video channel signal Sc representing individual video programs Vp indicated by recording instructions CRI. These instructions CRI indicates the channel CH and broadcasting time for the video programs Vp to be recorded. In response to playback instructions PBI the control subsystem 4 controls the playback of the recording indicated by the playback instruction PBI.

The video program selection arrangement 15 further comprises a user interface subsystem 11 which enables the user to enter control commands CC to select the video programs to be rendered by the rendering subsystem 9 and to program the recordings to be made by the video recorder 8.

The user interface subsystem 11 is of a type which cause the display of so-called video program guide PG which presents on overview of the video programs Vp distributed and the time schedule of the distribution of video programs Vp.

In Fig. 2 the control subsystem 4 and user interface subsystem 11 are shown as separate parts. However it will be clear for the skilled person that these subsystems can use common circuitry, for example in case the subsystems 4 and 11 make use of a software controlled processor the same processor can be used by both subsystems 4 and 11.

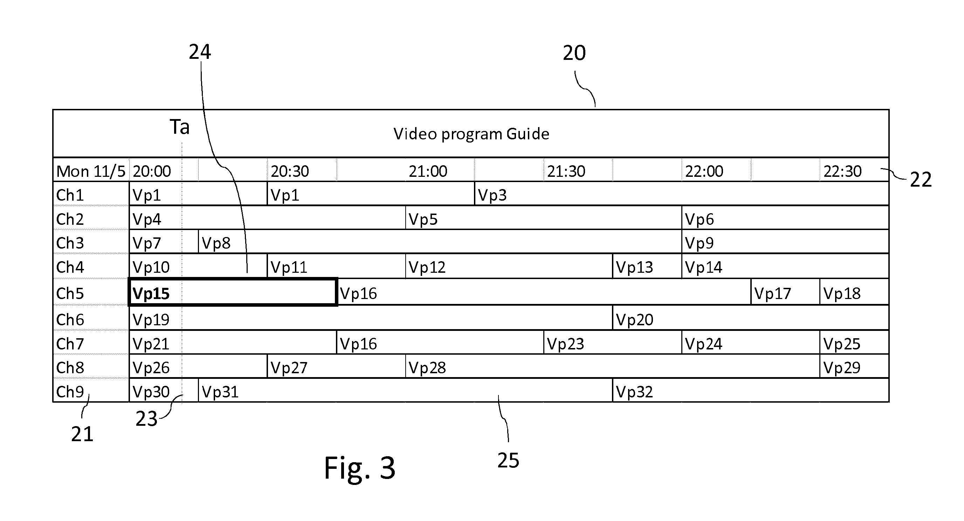

Fig. 3 shows by way of example an usual format for video program guide PG which includes an overview of the currently distributed video programs. The format shown is in the form of a grid indicating the scheduled video programs.

It will be clear to the skilled person that within the framework of the invention other formats than video program guides can be used to present the currently distributed video programs, for example by a list which only shows the currently distributed programs, but no video programs which are scheduled to be distributed later.

In Fig. 3 the video program guide PG is indicated by reference sign 20. The video program guide comprises a vertical axis 21 showing available channels CH1, ..., CH9 and a horizontal axis 22 indicating a time line covering a period of interest around an actual time Ta. In Fig. 3 the period of interest covers the time interval on Monday May 11 from 20:00 to 22:45. The actual time Ta is indicated by a line 23. The video programs (Vp1, ..., Vp 32) are represented as a grid of cells 25. The vertical position of the cell 25 in the grid indicates to which video channel CH the program belongs and the left border of the cell indicates the starting time Ts of the program and right border indicates the end time Te of the corresponding video program Vp.

By means of an usual navigation tool an individual cell in the grid can be selected. Such navigation can for example be performed by means of a remote control device 10 (Fig. 2) provided with navigation keys 12. By using these navigation keys 12 the selection can be moved in horizontal and vertical direction. In Fig. 3 the selected cell, indicated by reference sign 24, is indicated by bold borders.

The user interface subsystem 11 is arranged to provide in response to a user initiated recording control commands RC and playback control commands PBC recording instructions CRI and playback instructions PBI to the control subsystem 4. Based on these instructions CRI and PBI the control subsystem 4 derives the control signals for the video recorder 8 required for performing the recording and playback. In case the user desires a recording of a video program Vp he can select a video program Vp in the video program guide PG followed by entering the recording command RC, for example by pushing a record key 13 on the remote control device 10.

The video program guide PG is also helpful when the user wants to switch to another video program Vp that is distributed at that time. Since the actual time Ta is shown in the TV guide the user can easily see which programs are actually available on the different channels CH. The user interface is arranged such that by selecting an actually distributed video program Vp in which he is interested and entering a channel switch command CSC or watch command in the user interface subsystem 11, for example by pushing a channel switch key 14 on the remote control device 10. The user interface subsystem 11 then provides a channel selection instruction CSI to the control subsystem 4 which cause a switch to the desired channel CH.

It may happen that the video program Vp that the user wants to watch is already partly elapsed and a recording of this video program Vp is going on. The user interface subsystem 11 is arranged to check whether such situation exists and if so to automatically start the rendering of a time shifted version by starting a play back of an already recorded part of the video program Vp.

The above described functions of the user interface subsystem 11 can be implemented by hard wired circuitry, but implementations using a software controlled processor are preferred. The software for such processor comprises a part for controlling the display of the video program guide on the a display screen. This screen can be the same screen as used for the rendering the video programs or a separate screen, which is used for the interaction with user only, for example a screen on a remote control device. However as the separate screen a screen of another device can be used, such as a smart phone or tablet computer provided with a software application for controlling the video rendering and recording. This software is known as such and will therefore not described in further detail. The software for the user interface subsystem further comprise an usual navigation tool for the selection of the cell 24 in the grid of the video program guide PG. The software also comprise usual software which takes care of the interaction with the control subsystem 4. Such software translates the user commands into instructions for the control subsystem 4, such as providing a playback instruction PBI for starting the play back of an identified recording stored in the video recorder 8, the recording instructions CRI for initiating the recordings, and channel selection instructions CSI to switch the live rendering to another identified channel CH.

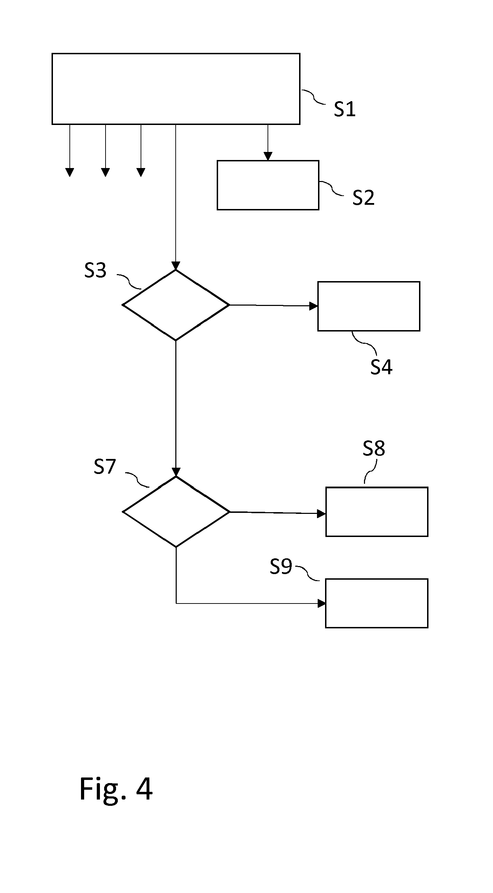

Fig. 4 shows a flow diagram of an embodiment of software subroutine for implementing a video program selection according to the invention.

The subroutine is executed in response to the receipt of a control command CC entered by the user for example by input keys on the remote control device 10. It is to be noted that there are several other possibilities to enter user commands than by means of a remote control, for example by means of a keyboard, a touch screen, mouse or other input device.

The software comprises a step S1 in which it is detected which type of control command CC has been entered. With which steps the subroutine continues depends on the detected type of user command. In case a recording command RC is detected, the subroutine continues with step S2 in which the recording control CRI required for the control of the recording of the selected video program Vp is transferred to the control subsystem 4 and the subroutine is left.

In case in step S1 a channel switch command CSC or watch command is detected, then the subroutine continues with step S3.

In step S3 it is detected whether a recording is already going on for the selected video program Vp, which means that a time shifted version of the selected video program is also available. This can be done on the basis of the data representing the recordings which were previously programmed. This data is stored in the control subsystem 4, but it is also possible to store such data in the user interface subsystem 11. If such ongoing recording is not detected, then Step S3 is followed by step S4. In step S4 a channel selection instruction CSI is submitted to the control subsystem 4 so as to cause a switch to the rendering of the video program Vp selected in the video program guide PG. The subroutine is left when the execution of step S4 has been finished.

If however the availability of a time shifted version of the selected program in the form of an ongoing recording is detected in step S3, then step S7 is executed. In step S7 it is checked whether there is a resume point available for the selected recorded program. Such resume point is stored when a play back of a recording is stopped before the end of the video program Vp is reached. The resume point indicates the point in the recorded program where the playback has stopped.

If such resume point is available a play back is restarted from the point where it has been stopped as indicated by the resume point ( step S8). This is done by sending the required playback instructions PBI to the control subsystem 4. After the execution of S8 the subroutine is left.

If no resume point is available a play back control instruction PBI is transferred to the control subsystem 4 for initiating the play back starting from the beginning of the recording (step S9). After the execution of S9 the subroutine is left.

It is to be noted that embodiments of the subroutine are possible without step S7 and S8. In that case step S6 is always immediately followed by step S9.

The embodiment shown in Fig. 2 is a TV apparatus in which the video rendering subsystem is integrated in the TV apparatus. It will be clear for the skilled person that alternatively the invention can be realized by apparatuses wherein the video rendering subsystem is not included in the device comprising the control subsystem and user interface subsystem, such as for example in a so-called set top box.

Further in the embodiment shown in Fig. 2 the recording and playback function is performed by a video recorder which is located on the receiver side of a the distribution network. Recently network providers started to offer services whereby the recording function is incorporated on the head end side or server side of the network. For each client who want to make use of the recording function storage capacity is available at the server or head end side. Recording and play back of video programs are controlled via a return channel of the distribution network by the equipment on the receiver side, i.e. set top box or interactive TV apparatus.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

## Claims

1. Video program selection arrangement (15; 40) for selecting a video program to be rendered on a video rendering device (9; 41), which arrangement comprises:
- a user interface subsystem (11 ;47) for causing a display of distribution schedule information of at least one video program which is currently distributed and for enabling the entry of control commands by a user, which control commands comprise a record programming command to program a recording of a video program and a program watch command for selecting the at least one video program to be rendered on the video rendering device (9; 41), and
- a control subsystem (4; 48) cooperating with the user interface subsystem (11 ;47) for controlling the programmed recording and the rendering in accordance with the entered control commands,
whereby the arrangement is arranged:
- to detect in response to the program watch command whether a time shifted version of the selected video program is available, the time shifted version of the selected program being a programmed ongoing recording of the selected video program to be rendered,
- to render the time shifted version of the video program without requiring further user interaction in case the availability of the time shifted version is detected, and
- to render the live rendering of the selected video program without requiring further user interaction in case the unavailability of the time shifted version is detected.

2. Arrangement as claimed in claim 1 wherein the user interface subsystem is arranged to display an overview comprising the distribution schedule information of a plurality of currently distributed video programs and arranged to select the video program to be rendered out of the overview.

3. Arrangement as claimed in claim 1 or 2, wherein the user interface subsystem (11; 47) is arranged to display the distribution schedule information of video programs which match with a user defined selection criterion.

4. Arrangement as claimed in any of the preceding claims whereby the arrangement is arranged to store resume points for the time shifted version for indicating the latest part of the time shifted version that has been played back and is arranged to resume the playback of stored program at the resume point for the selected video program in case such resume point is available.

5. Video program receiver comprising a program selection arrangement as claimed in any one of the claims 1 to 4.

6. Video program receiver as claimed in claim 5, whereby the video program receiver is a TV-apparatus.

7. Video program receiver as claimed in claim 5, whereby the video program receiver is a set top box.

8. Method for selecting a video program to be rendered, in which method
- distribution schedule information is displayed for at least one video program that is currently distributed,
- the entering of control commands by a user is enabled, which control commands comprise a record programming command to program a recording of a video program and a program watch command for selecting the at least one video program to be rendered on the video rendering device,
- in response to the program watch command it is detected whether a time shifted version of the selected video program is available, the time shifted version of the selected program being a programmed ongoing recording of the selected video program to be rendered,
- in case the availability of the time shifted video program is detected, the time shifted video program is rendered without requiring further user interaction, and
- in case the unavailability of the time shifted video program is detected, the live rendering of the selected video program is rendered without requiring further user interaction.

9. Computer program product comprising instructions which cause, when executed by a programmable processor the method as claimed in claim 8 to be performed.
